# EUROPEAN PATENT APPLICATION

(11) **EP 1 245 718 A2**
(43) Date of publication of application: **02.10.2002**
(21) Application number: 02007082.7
(22) Date of filing: 27.03.2002
(51) Int. Cl.: D06M 11/77, F02B 77/11, B60R 13/08

(54) **Sound and heat insulating material and method for manufacturing the same and articles made thereof**

(30) Priority: 20.03.2002 JP 2002078052; 30.03.2001 JP 2001099579
(71) Applicant: NICHIAS CORPORATION, Tokyo (JP); Tatsuta Co., Ltd., Ikoma-gun, Nara-ken (JP); Yumex Corporation, Hiroshima-shi, Hiroshima-ken (JP)
(72) Inventor: Madono, Hideaki, Hiroshima-shi, Hiroshima-ken (JP); Tanaka, Masafumi, Yokohama-shi, Kanagawa-ken (JP); Makabe, Hiroshi, Yokohama-shi, Kanagawa-ken (JP); Fukuhara, Kazuto, c/o Tatsuta Co., Ltd., Ikoma-gun, Nara-ken (JP); Tamaoki, Kenji, c/o Yumex Corp., Hiroshima-shi, Hiroshima-ken (JP); Kawamura, Shuji, Hiroshima-shi, Hiroshima-ken (JP)
(74) Representative: VOSSIUS & PARTNER

(57) **Abstract**

An inexpensive sound and heat insulating material that is able to prevent fine fiber granules generated by heat deterioration of the inorganic fiber as a main component of the base material from being scattered while maintaining the sound insulating property and heat resistant property. A coating layer of a lepidoflaky mineral is formed by coating, followed by drying, a water base dispersion of the lepidoflaky mineral by brushing, spraying, roll coating, dipping or showering on the surface of the base material comprising a heat-resistant fiber such as an inorganic fiber. Further exhaust manifold covers, engine exhaust pipes sound absorbing blocks made of, or utilizing the sound and heat insulting material.

## Description

The present invention relates to a sound and heat insulating material. In particular, the present invention relates to a sound and heat insulating material manufactured by forming a coating layer of a lepidoflaky mineral on a base material layer mainly composed of a heat-resistant fiber, and the method for manufacturing the same.

Further the present inventions relates to articles made of the sound and heat insulating material.

A sound and heat insulating material is laminated and adhered on the inner surface of an engine cover that is used around the engine of an automobile, an exhaust manifold cover and a muffler for shielding and absorbing heat and sound generated therefrom. Textiles of a heat-resistant fiber such as an inorganic fiber covered with a silica cloth, a textile of a metal fiber, a perforated steel plate, an aluminum foil or aluminum glass cloth, or a polyethylene fabric or polypropylene fabric are used for manufacturing these sound and heat insulating materials.

Among the sound and heat insulating materials described above, those covered with the silica cloth or textile of a metal fiber require very expensive raw materials. Heat resistance of the sound and heat insulating material covered with the aluminum foil or aluminum glass cloth, or with the polyethylene fabric or polypropylene fabric is so insufficient that it cannot be used in a high temperature environment.

The heat-resistant fiber constituting the base material layer tends to be pulverized through deterioration by heat during a long period of service where the insulating material is disposed in a high temperature environment such as around the engine or the exhaust manifold. However, since the sound and heat insulating material covered with the fabric of the metal fiber or with the perforated steel plate has large perforated holes or voids on the surface, finely pulverized granules are scattered through the sheath material by vibration, and cause many troubles.

The object of the present invention, completed by considering the situation described above, is to provide a sound and heat insulating material that is relatively cheap and is manufactured by a relatively simple process, and which scatters a very little amount of pulverized fine granules from the inside thereof when vibrated while maintaining its excellent noise attenuation characteristics (sound insulating property), and a method for manufacturing the same.

This object could be achieved on the basis of the finding that a coating layer, formed by coating and drying a water base dispersion of a lepidoflaky mineral on the surface of a base material mainly composed of a heat-resistant fiber such as an inorganic fiber, tightly adheres on the surface of the base material layer, and the coating layer is able to block fine fiber powder from passing through the coating layer.

In a first aspect, the present invention provides a sound and heat insulating material manufactured by forming a coating layer of a lepidoflaky mineral on a surface of a base material layer. In a second aspect, the present invention provides a method for manufacturing a sound and heat insulating material comprising the step of coating a water base dispersion of a lepidoflaky mineral on a surface of a base material layer, followed by drying to form a coating layer of the lepidoflaky mineral.

Fig. 1 illustrates a cross sectional structure of the sound and heat insulating material manufactured in Example 1.

Fig. 2 illustrates a cross sectional structure when the sound and heat insulating material according to the present invention is formed by covering on the inner side surface of the automobile exhaust manifold cover manufactured in Example 2.

Fig. 3 illustrates a vertical cross sectional structure of a muffler manufactured by applying the sound and heat insulating material according to the present invention in the automobile exhaust system prepared in Example 3.

Fig. 4 illustrates a side view of a vertical cross sectional structure of the sound absorbing block manufactured in Example 4.

Fig. 5 illustrates a front view of the sound absorbing block manufactured in Example 4.

In the drawing, the reference numerals 10 denotes a sound and heat insulating material. Each of the reference numerals 11, 23, 34 and 47 denotes a base material layer. Each of the reference numerals 12, 24, 35 and 48 denotes a coating layer of a lepidoflaky mineral. The reference numeral 20 denotes a manifold cover having a sound and heat insulating material. The reference numeral 21 denotes an inner wall face of a manifold. The reference numeral 22 denotes an adhesive layer. The reference numeral 30 denotes a muffler. The reference numeral 31 denotes a perforated pipe. The reference numeral 32 denotes a number of holes. The reference numeral 33 denotes an outer shell. The reference numeral 40 denotes a sound absorbing block. The reference numeral 41 denotes a front panel. The reference numeral 42 denotes apertures on the front panel. The reference numeral 43 denotes a sound absorbing material. The reference numeral 44 denotes a frame. The reference numeral 45 denotes bolt holes. The reference numeral 46 denotes a back door.

The base material layer to be used in the sound insulating material according to the first aspect of the present invention is mainly composed of a heat-resistant fiber, and is usually formed into a sheet such as a fabric, nonwoven fabric or mat, or into a irregularly shaped three dimensional block. It may be used as a single component, or may be used, if necessary, by laminating on the surface of other articles or structures.

Examples of the heat-resistant fiber include, though not particularly restrictive, inorganic fibers such as a rock wool, glass fiber, silica fiber, silica-alumina fiber, ceramic fiber and alumina fiber, and heat-resistant organic fibers made of, for example, aromatic polyamide and polyimide, benzimidazole, silicone and metal chelate polymers.

Other articles and structures for which the base material layer of the sound and heat insulating material according to the present invention is advantageously used are an article or structure usually used under an environment exposed to a high temperature, a sound shielding article or structure of an article or structure that generates vibration and noise, an article or structure for absorbing and shielding external noises or structures with the surface exposed to open environments. Examples of them include an inner surface of a high temperature heat treatment furnace, a muffler in an automobile exhaust system, and a sound shielding and absorbing block.

While the method for laminating the base material layer on the forgoing articles or structures may be by merely structural contact and fixing of the former on the latter, a heat resistant adhesive may be used for adhesion. While the heat resistant adhesive is not particularly limited, examples of it may include an acrylic adhesive, a silicone based adhesive and silica based adhesive. The silica based adhesive is particularly preferable among them.

While examples of the lepidoflaky mineral to be used for the coating layer formed on the surface of the base material layer include vermiculite, sericite and mica, vermiculite is preferable among them. However as vermiculite usually contains water of crystallization, it is preferably calcinated at, for example, 600 to 900°C because hydrated minerals are easily deformed or collapsed upon exposure to a high temperature.

Although the thickness of the coating layer of the lepidoflaky mineral is not specifically limited, it is usually 20 g/m² or more, preferably 50 g/m² or more as the solid content. The strength of the coating layer becomes insufficient when the thickness is too small, and scattering of the pulverized fibers cannot be sufficiently prevented. While the upper limit of the thickness is not particularly limited, a thickness over 300 g/m² is not practical since the blocking effect against the scattering of pulverized fiber is not improved despite increased cost of the coating material, and a thickness of 200 g/m² or less is sufficient for practical purposes.

The area on which the coating layer of the lepidoflaky mineral is formed on the surface of the base material layer may be appropriately determined depending on the situations where the sound and heat insulating material is used. While the coating layer is usually formed over the entire surface of one side or over the entire surfaces of both the front and rear surfaces of the base material layer, it may be also formed on the side faces of the base material layer, if necessary. Anyhow, it is more preferable to cover the entire surface exposed to the external space. However, use of the sound and heat insulating material on the surface area not exposed to the outer space may be omitted depending on the situations of use of the sound and heat insulating material.

Although the surface of the coating layer of the lepidoflaky mineral may be covered with a further upper covering layer for improving the structural strength thereof, it is preferable not to use a flammable or less heat resistant material as far as possible, and it is more preferable to wrap the surface with a heat resistant net.

While the material for constructing the heat resistant net is not particularly limited, examples of the material include metal wires such as an iron wire, an aluminum wire, a brass wire, a stainless steel wire and a copper wire, or heat resistant filaments such as filaments of heat resistant synthetic resin. The stainless steel wire and copper wire are preferable among them for environmental resistance. Although the diameter of these wires are not particularly limited, a diameter of 0.7 to 2.0 mm is preferable considering the strength and flexibility. While the mesh size (the distance between the wires) of the net made of these wires are not particularly limited, it is usually 1 to 50 mm, preferably 2 to 10 mm.

The method for manufacturing the sound and heat insulating material according to the second aspect of the present invention comprises the steps of coating a water base dispersion of the lepidoflaky mineral on the surface of the base material layer, followed by drying to form a coating layer of the lepidoflaky mineral.

The water base dispersion described above can be prepared by dispersing the lepidoflaky mineral (for example lepidoflaky vermiculite) in water. The favorable concentration range of the solid content of the water base dispersion used is usually 5 to 30% by weight. A coating layer with a sufficient thickness is difficult to form when the concentration of the solid content is less than 5% by weight, while the water base dispersion is difficult to spread due to its high viscosity when the concentration of the solid content exceeds 30% by weight.

Auxiliary agents such as a dispersant and thickener may be used together if necessary, for preparing the water base dispersion. While these auxiliary agents may be appropriately selected for use from known agents examples of the dispersant include lignin sulfonic acid, oxy-organic acid salt, alkyl aryl sulfonates, polyoxyethylene alkyl aryl ether, complex salts of polyols, and/or higher polyhydric alcohol sulfonate. Examples of the thickener include methyl cellulose and starch.

The amount of use of these auxiliary agents should be as little as possible from the view point of heat resistance, and is desirably 3% by weight or less as the solid content. When the amount of use is too much, on the other hand, the heat resistance is decreased while sometimes arising smoke and odor, or the sound absorbing effect of the base material is decreased because the voids of the base material are plugged with the auxiliary agent.

The water base dispersion may be coated by a conventional method such as brushing, spraying or roll-coating, or dipping or showering. Coating methods such as brushing and spraying are practical for individually coating the dispersion on the exposed surfaces such as the top and side faces when the base material layer is previously adhered on the surface of other articles or constructions. The adhesive used for adhering the base material layer on the surface of other materials or constructions is preferably heat resistant such as an acrylic adhesive, a silicone based adhesive and a silica based adhesive.

The amount of the water base dispersion to be coated is appropriately determined depending on uses of the sound and heat insulating material according to the present invention, and the practical amount of coating is usually controlled to be 20 g/m² or more, preferably in the range of 50 to 200 g/m², as the solid content as described above. The amount of coating may be controlled by adjusting the concentration of the water base dispersion.

A coating layer of the lepidoflaky mineral (such as vermiculite) is obtained by drying the coating layer of the water base dispersion, and the surface of the base material is coated by allowing the dispersion to tightly adhere on the surface of the base material layer. Although the drying method is not particularly limited, a drying temperature of 100°C or more, for example about 105°C, is preferable becouse the moisture evaporation efficiency is desired for saving the drying time from the industrial point of view. When more rapid drying is desirable, the coating layer is placed in a hot air stream at 140 to 200°C.

The sound and heat insulating material manufactured as described above has a construction comprising a coating layer of the lepidoflaky mineral on the surface of the base material layer of the heat resistant fiber, and its manufacturing process is relatively simple and cheap. The sound and heat insulating material is featured by its unusually high scattering preventive or shielding effect against fine particles by virtue of providing the coating layer of the lepidoflaky mineral while maintaining an excellent heat insulating property, a heat resistant property and a noise attenuation property. Since the coating layer of the lepidoflaky mineral as an element of this excellent scattering preventive or shielding effect is resistant to vibration, it does not readily crack and fall down by vibration shock.

Accordingly, the sound and heat insulating material according to the present invention has a stable dust preventive effect in the environment where fine particles and pulverized substances are generated by vibration, and is very useful in the following applications.

### (1) Sound absorbing material for muffler in exhaust pipe of automobile

Since the exhaust gas discharged with an impact from the automobile engine is a high temperature gas that causes strong vibration, a heat resistant inorganic fiber is used as a sound absorbing material. However, the inorganic fiber of the sound absorbing material is pulverized by the shock of the exhaust gas and is scattered in the air, resulting in fine dusts. When the coating layer of the lepidoflaky mineral according to the present invention is formed on the surface of the inorganic fiber layer, the fine fiber dusts can be prevented from being scattered in the air.

### (2) Sound and heat insulating material of automobile exhaust manifold cover

Since the exhaust manifold portion around the automobile engine is heated in service at a high temperature and generates strong vibration, a heat resistant and sound insulating material is usually laminated on the inner surface of the cover for blocking the vibration sound. However, when the sound insulating material contains an inorganic fiber for improving the heat resistance thereof, the fiber is pulverized by vibration and fine dusts are scattered in the air. When a material having a coating layer of the lepidoflaky mineral according to the present invention on the inorganic fiber layer is used, the fine fiber dusts can be prevented from being scattered in the air.

### (3) Heat insulating material for walls of a continuous heat treatment furnace

While a heat insulating material of an inorganic fiber is used on the walls of a continuous heat treatment furnace for heat insulation, fine fiber dusts are scattered in the furnace due to a high temperature and vibrating environment. Consequently, part of the dusts adhere on the surfaces of steel materials being heat treated to generate compressed flaws on the surface of the steel material, resulting in defective products. However, when a covering layer of the lepidoflaky mineral according to the present invention is applied on the inorganic fiber layer on the inner wall of the furnace, the fine fiber dusts is prevented from being scattered in the furnace, thereby preventing defective steel products having compressed flaws from being manufactured.

### (4) Sound insulating material for sound insulating wall

The sound insulating wall is usually used outdoors. When an inorganic fiber such as a glass fiber is used as a sound insulating material of the sound insulating wall for improving weather resistance and sound insulating property, the fiber is pulverized due to temperature changes during days and nights or throughout four seasons, wind and rain, and direct sunshine, and the pulverized fine dusts of the fiber are scattered in the air. However, when the coating layer of the lepidoflaky mineral according to the present invention is formed on the surface of the inorganic fiber layer, the fine fiber dusts are prevented from scattering in the air while maintaining the sound absorbing property of the inorganic fiber layer, thereby protecting the air environment from being polluted.

While the present invention is described in more details with reference to examples, the present invention is by no means restricted thereto.

### EXAMPLE 1

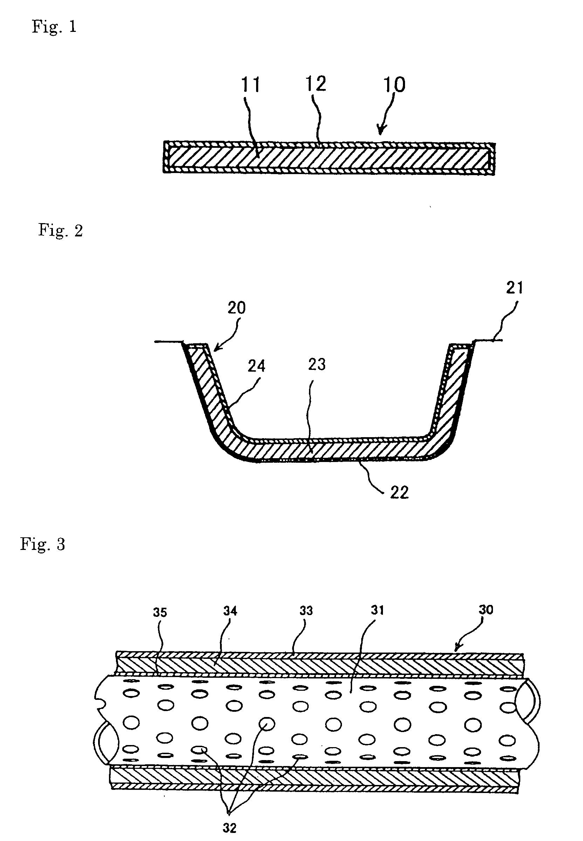

The method for manufacturing the sound and heat insulating material having the structure shown in Fig. 1 will be described hereinafter.

After removing water of crystallization from commercially available vermiculite (lot No. 0, made by Nichias Corp.) by calcinating at 800°C for 1 hour, 150g of calcinated vermiculite was added to 1 litter of distilled water, and a water base dispersion of vermiculite containing 13% by weight of the solid content was prepared by uniformly agitating the mixture.

Ten sheets of the base material layer 11 with a dimension of 300 mm × 300 mm were prepared from a mat of the base material (Fineflex 1300 blanket, made by Nichias Corp.) with a thickness of 6 mm and a mean bulk density of 0.13 g/cm³ comprising a silica-alumina fiber with a mean fiber diameter of 2.5 µm.

A water base dispersion of calcinated vermiculite obtained above was coated on both surfaces and on four side faces of the base material layer 11 using a brush so as to achieve thickness 100 g/m² after drying of the coating layer of vermiculite layer. Then, the coating layer 13 was formed by drying with heating in an air-flow type oven at 160°C for 1 hour, thereby obtaining the sound and heat insulating material 1 according to the present invention. Ten sheets of sound and heat insulating material 10 were manufactured by the same method as described above. The heat insulating property, heat-resistant property, noise attenuating characteristics, vibration suppressing property and scattering preventive property were measured with respect to the sound and heat insulating materials obtained by the method to be described hereinafter. The results are shown in Table 1.

### Heat Insulating Property:

A heating device assembled as described below was used. Four grooves were cut on the surface of a brick with a surface area of 80 mm × 150 mm, and a nickel-chromium heater was embedded in the groove. A ceramic plate frame having an elevation of 100 mm from the surface of the brick was placed so as to surround the brick, and the ceramic plate frame and the brick was placed in a iron plate frame with an area of 300 mm × 400 mm having the same elevation as the ceramic plate frame. A heat insulating material made of a silica-alumina fiber was packed between the ceramic plate flame and the iron plate frame.

A thermocouple is upwardly projected out from the center of the surface of the brick, and the elevation of the tip of the thermocouple is located at 15 mm above the surface of the brick. The voltage applied to the nickel-chromium heater is properly adjusted with a slidable transformer.

For measuring the heat insulating property, an Alster steel plate cut into a size of 100 mm × 200 mm was placed on the top end of the opening of the heating device described above. The nickel-chromium heater disposed in the device was connected to a power source, and the voltage was adjusted so that the temperature as measured by the thermocouple in the device is 800°C.

After removing the Alster steel plate above, a test plate of another separately prepared Alster steel plate with a dimension of 100 mm × 200 mm, on which a sound and heat insulating material 10 was adhered by coating 0.6 mm thickness of a silica based adhesive, was placed on the device above with the sound and heat insulating material side downward. The test plate was heated for 1 hour while adjusting the electric power so that the temperature of the heating device as measured with the thermocouple becomes 800°C, and the temperature on the Alster steel plate exposed at the outside of the test plate was measured with another thermocouple.

### Heat Resistant Property:

The sound and noise insulating material 10 was heat treated at 600°C for 8 hours using an electric furnace, and five samples were measured for the tensile strength of each sample after the heat treatment. The averaged tensile strength was defined to be the heat resistant property.

### Noise Attenuation Property:

A sheet of Alster steel plate of 300 mm length, of 300 mm width and of 0.6 mm thickness was bent into an arch with a radius of curvature of 100 mm in parallel to one edge of the plate. Then, screw thread holes were drilled on one line at the top of the arch at the positions by 100 mm and 200 mm apart from the end of the line. A test piece was adhered on the entire inner face of the arch, and the arch was placed with its inner surface downward. The arch was fixed with screws to a supporting table placed on a base so that both ends of the arch is located at 5 mm above the base. A white noise was generated by oscillating the base itself at frequencies ranging from 1000 Hz to 4000 Hz in a direction parallel to the top line on the arch. The noise generated was detected with a sound collecting microphone directed downward at a position 100 mm above the center line of the arc to measure noise characteristics (dB), and a time-averaged noise level was determined. Noise characteristics without adhering the test piece was also measured by the same method as described above, and the noise attenuation property was calculated from the following equation.

Noise attenuation characteristics (dB) = noise characteristics (dB; with the sound and heat insulating material) - noise characteristics (dB; without the sound and heat insulating material)

### Vibration Suppressing Characteristics:

A sound and heat insulating material with a dimension of 240 mm × 15 mm was bonded onto an Alster steel plate of 0.6 mm thickness and of 240 mm × 15 mm dimension with a silica based adhesive, and the vibration suppressing property was measured at 1000 Hz in the temperature range of -20°C to 100°C by a mechanical impedance method to be described below in accordance with JIS G0602.

In the mechanical impedance method, an impedance head was attached at the center of a rectangular sample, which was oscillated by applying a random signal. Acceleration and response to the applied force was subjected to a fast Fourie transform to determine the frequency response function. The frequency width (half-width) at a frequency 3 dB lower than the impedance peak against the resonance frequency at 1000 Hz was divided by the resonance frequency to determine the loss factor.

### Scattering Preventive Property:

The test piece after the sound attenuation test was calcinated at 600°C for 8 hours, assembled to a vibration tester (made by Emick Co.), and subjected to 1 × 10⁷ times of vibration tests at 20G and 100 Hz. The rate of change of weight (weight loss in % by weight) before and after the vibration test was measured.

### COMPARATIVE EXAMPLE 1

The heat insulating property, heat-resistant property, noise attenuation characteristics, vibration suppressing property and scattering preventive property were measured by the same method as in Example 1 using the sound and heat insulating material 10 used in Example 1, except that no vermiculite coating layer 12 was formed. The results are shown in Table 1.

### COMPARATIVE EXAMPLE 2

The heat insulating property, heat-resistant property, noise attenuation characteristics, vibration suppressing property and scattering preventive property were measured by the same method as in Example 1, except that the sound and heat insulating material 10 used in Example 1 was wrapped with a metal woven net with a wire diameter of 0.18 mm and a mesh of 50, in place of coating the layer containing vermiculite. The results are shown in Table 1. Evaluations of the heat resistant property and vibration suppressing property were omitted in this example.

**TABLE 1**

| | EXAMPLE 1 | COMPARATIVE EXAMPLE 1 | COMPARATIVE EXAMPLE 2 |
|---|---|---|---|
| HAET INSULATING PROPERTY(°C) | 374 | 372 | 389 |
| HEAT RESISTANT PROPERTY:N/50mm | 24 | 9 | - |
| NOISE ATTENUATION PROPERTY(dB) | Δ19 | Δ19 | Δ15 |
| VIBRATION SUPPRESSING PROPERTY | 0.04-0.1 | 0.04-0.08 | - |
| SCATTERING PREVENTIVE PROPERTY (WEIGHT LOSS wt%) | 0 | 76 | 5 |

The results above show that the sound and heat insulating material according to the present invention shows an improvement in the heat resistant property as well as a remarkable improvement in the scattering preventive property while maintaining the excellent heat insulating property, noise insulating property (noise attenuation characteristics) and vibration suppressling property of the conventional sound and heat insulating material. It is clear that these improvements are achieved by providing the coating layer 12 mainly composed of a lepidoflaky mineral such as vermiculite.

### EXAMPLE 2

A method for coating the inner surface of the automobile exhaust manifold cover with the sound and heat insulating material according to the present invention is shown in this example. The method is described with reference to Fig. 2 below.

An adhesive layer 22 was provided by coating a silica based adhesive on the entire inner surface 21 of the exhaust manifold cover 20, and the same mat of the base material layer 23 of the silica-alumina fiber as used in Example 1 was adhered so that the mat is tightly bonded to the inner surface of the cover.

Then, a water base dispersion of the calcinated vermiculite prepared in Example 1 was coated on the entire exposed surface of the mat of the base material layer 23 including the surface and side faces by using a brush so as to achieve 100g/m² of the solid content, followed by drying for 1 hour using a hand dryer blowing a hot air stream at 150°C to form a vermiculite coating layer 24. The thickness of the vermiculite coating layer 24 on the portion of the sound and heat insulating material (23, 24) was 0.12 mm.

A total of 30,000 km of intermittent running test was performed using a passenger car on which the exhaust manifold cover 20 laminated with the sound and heat insulating material (23, 24) is attached, and noise levels before and after the running test were evaluated. No change was observed in the noise level. Although a part of the vermiculite coating layers 24 on the surface of the sound and heat insulating material (23, 24) was thinned, no scattering and fall-down of the fibers in the mat of the base material layer 23 of the silica-alumina fiber were detected.

### COMPARATIVE EXAMPLE 3

A total of 30,000 km of intermittent running test was performed using a passenger car by the same method as in Example 2, except that only the mat of the base material layer 23 of the silica-alumina fiber having no vermiculite coating layer 24 on the surface was used in place of the sound and noise insulating material (23, 24). The result showed that an weight loss was observed due to scattering of about 30% of the fiber in the mat of the base material layer 23 of the silica-alumina fiber.

### EXAMPLE 3

This example illustrates the muffler having the sound and heat insulating material in the exhaust system of an automobile as shown in Fig. 3. Fig. 3 illustrates a vertical cross sectional structure of a muffler manufactured by applying the sound and heat insulating material according to the present invention in the automobile exhaust system. A water base dispersion of calcinated-vermiculite prepared by the same method as in Example 1 was coated on the entire surface of the mat of the base material layer 34 with a thickness of 6 mm comprising a silica-alumina fiber with a mean fiber diameter of 2.5 µm using a brush so as to achieve a coating amount of 100 g/m² as the solid content. Then, the vermiculite coating layer 35 was formed by drying the coated water base dispersion with a hot air stream at 150°C to form the sound and heat insulating material (34, 35) according to the present invention.

The sound and heat insulating material (34, 35) was wound on the outer surface of the inner pipe 31 having a number of holes 32 on its wall surface of the muffler 30 assembled in an automobile so that the vermiculite coating layer 35 side thereof was brought into contact with the outer surface of the pipe 31 and the base material layer 34 was disposed outside. The base material layer 34 was covered with an outer shell 33 so that the sound and heat insulating material inserted between the inner perforated pipe and the outer shell.

A total of 15,000 km of intermittent running test was performed using the passenger car above. No change of the noise level was detected by evaluation of the noise level before and after the running test. Although part of the vermiculite coating layers 35 on the surface of the sound and heat insulating material was thinned, no scattering and fall-down of the fibers in the mat of the base material layer 34 of the silica-alumina fiber were detected.

### COMPARATIVE EXAMPLE 4

A total of 15,000 km of intermittent running test was performed using a passenger car by the same method as in Example 3, except that only a mat of the base layer 34 of an E-glass fiber having no vermiculite coating layer 35 on the surface was used in place of the sound and heat insulating material in Example 3. As a result, about 45% of the E-glass fiber of the mat of the base layer was lost by scattering.

### EXAMPLE 4

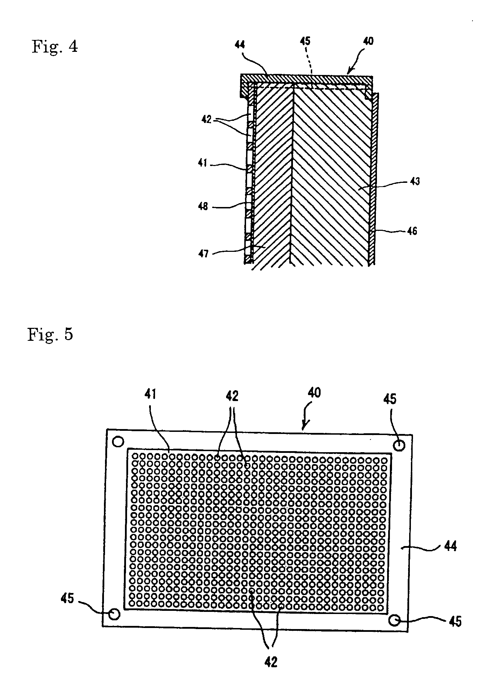

This example illustrates the structure of the sound absorbing block covered with the sound and heat insulating material of the present invention according to Example 1. This example will be described with reference to Figs. 4 and 5.

Fig. 4 illustrates a side view of a vertical cross sectional structure of the sound absorbing block integrated with the sound and heat insulating material according to the present invention, and Fig. 5 shows a front view thereof.

A box-type frame 44 of 100 cm height, of 150 cm width and of 15 cm length was constructed using a rust prevented metal plate. The frame has a rectangular opening leaving a margin of 2 cm width around its periphery and a removable back lid 46. A rust-free metal front panel 41 of 1.0 mm thickness and having many apertures 42 on its surface, a coating layer 48 of the lepidoflaky mineral manufactured by the same method as in Example 1, a sound and heat insulating material (47, 48) of 6 mm thickness and comprising the base material layer 47, and a sound absorbing material 43 made of a glass wool laminate of about 15 cm thickness were sequentially laminated from the front side to the back. A sound absorbing block 40 was manufactured by tightening the back lid 46 thereafter.

A supporting pole was constructed in the outdoors, and the sound absorbing block 40 was attached to the supporting pole by inserting anchor bolts secured to the supporting pole into holes 45 for bolt pipes provided at four corners of the sound absorbing block 40 and by tightening the nuts. The sound absorbing block 40 was subjected to a weather resistance test by leaving it to stand for 180 days.
Neither peeling of the vermiculite coating layer 48 on the surface of the sound and heat insulating material, nor scattering of the alumina-silica fiber and glass wool fiber on the inner surface was observed by a visual inspection after the test.

### COMPARATIVE EXAMPLE 5

The weather resistance test was performed by fixing the block by the same method as in Example 4, except that the base material layer 47 of the silica-alumina fiber having no vermiculite coating layer 48 was used in place of the sound and heat insulating material (47, 48) in Example 4. The result showed that a part of the silica alumina fiber of the base material layer 47 of the silica-alumina fiber on the surface of the sound and heat insulating material and glass wool fiber in the inner layer had been scattered.

The sound and heat insulating material according to the present invention is constructed of a base material layer of a fabric, nonwoven fabric or mat mainly composed of a heat resistant fiber, and a coating layer mainly composed of a lepidoflaky mineral on the surface of the base material layer. Accordingly, the materials used is relatively cheap with a simple manufacturing process. In addition, the sound and heat insulating material according to the present invention may be readily formed or laminated on the surface of any existing articles having complex configurations such as concave-convex portions using a heat resistant adhesive. In addition, the pulverized fiber is not scattered to the outside by passing through the coating layer, even when the heat resistant fiber constituting the base material is deteriorated during a long period of use to generate the pulverized fiber, since the surface coating layer has a multilayer structure of the lepidoflaky mineral. Furthermore, air gaps in the base material layer are not plugged since the lepidoflaky mineral forming the coating layer is not substantially permeated into the base material layer, thereby enabling excellent sound attenuation characteristics (sound insulating property) to be maintained.

## Claims

1. A sound and heat insulating material, comprising:
a base material layer of a heat-resistant fiber, and
a coating layer of a lepidoflaky mineral formed on a surface of the base material layer.

2. A sound and heat insulating material according to Claim 1, further comprising a heat resistant net covering the coating layer of the lepidoflaky mineral.

3. A sound and heat insulating material according to Claim 1 or claim 2, wherein the lepidoflaky mineral is vermiculite.

4. A sound and heat insulating material according to Claim 1 or Claim 2, wherein the lepidoflaky mineral is sericide.

5. A sound and heat insulating material according to Claim 1 or Claim 2, wherein the lepidoflaky mineral is mica.

6. A sound and heat insulating material according to Claim 3, wherein the vermiculite is calcinated vermiculite.

7. A sound and heat insulating article, comprising:
a base,
a sound and heat insulating material according to any of Claims 1-6 which covers a surface of the base, and
a heat-resistant net covering an exposed surface of the sound and heat insulating material.

8. An exhaust manifold cover of an automobile, comprising:
a sound and heat insulating material according to any of Claims 1-6 laminated on an exhaust manifold side of the cover, with the layer of lepidoflaky material forming an exposed face.

9. A muffler for engine exhaust gas, comprising:
an inner perforated pipe,
an outer shell sheathing the inner pipe,
a sound and heat insulating material according to any of claims 1-6 inserted into a space between the inner pipe and the shell, with the coating layer of the lepidoflaky mineral facing the inner pipe.

10. A sound absorbing block, comprising:
a layer of sound absorbing material and
a sound and heat insulating material according to any of claims 1-6 laminated on an exposed face of the layer, with the coating layer of lepidoflaky material forming an exposed face.

11. A method for manufacturing a sound and heat insulating material comprising the step of coating a water base dispersion of an lepidoflaky mineral on a surface of a base material of heat-resistant fiber and the step of drying the dispersion to form a coating layer of the lepidoflaky mineral on the surface of the base material.

12. A method for forming a sound and heat insulating material layer on an article comprising the step of covering the article with a base material of a heat-resistant fiber layer on the surface of the article via a heat-resistant adhesive, the step of coating an exposed surface of the base material layer with an water base dispersion of a lepidoflaky mineral and the step of drying the dispersion to form a coating layer of the lepidoflaky mineral on the surface of the base material layer.

13. A method according to any one of Claims 11-12, wherein the lepidoflaky mineral is calcinated vermiculite.
